Europäisches Patentamt

(19) European Patent Office

Office européen des brevets

(11) Publication number: **0 153 661**
**B1**

(12) **EUROPEAN PATENT SPECIFICATION**

(45) Date of publication of patent specification: **05.09.90**

(21) Application number: **85101573.5**

(22) Date of filing: **13.02.85**

(51) Int. Cl.⁵: **G 01 K 7/18, G 01 K 13/02**

(54) Temperature probe.

(30) Priority: **17.02.84 US 581426**

(43) Date of publication of application:
**04.09.85 Bulletin 85/36**

(45) Publication of the grant of the patent:
**05.09.90 Bulletin 90/36**

(84) Designated Contracting States:
**AT BE CH DE FR GB IT LI LU NL SE**

(56) References cited:
**CH-A- 389 275**
**US-A-4 243 968**

**THE POST OFFICE ELECTRICAL ENGINEERS
JOURNAL., vol. 60, no. 2, July 1967, pages
135-137, London, GB;
Idem
Idem**

(73) Proprietor: **WEED INSTRUMENT CO., INC.**
**707 Jeffrey Way**
**Round Rock Texas 78680-0300 (US)**

(72) Inventor: **Gotcher, Ricky G.**
**900 Burkett Lot No. 6**
**Taylor Texas 76574 (US)**

(74) Representative: **Patentanwälte Grünecker,
Kinkeldey, Stockmair & Partner
Maximilianstrasse 58
D-8000 München 22 (DE)**

Courier Press, Leamington Spa, England.

**Description**

The invention relates to a temperature probe in accordance with the preamble part of claim 1.

"The Post Office Electrical Engineers Journal", vol. 60, no. 2, July 1967, pages 135 to 137, London, GB, discloses on page 136, right column, a temperature probe having an internal cavity completely filled with enamelled copper wire windings forming a temperature sensor. The tip portion of said probe consists of an outer tube-shaped copper sleeve, a pressed in copper pot and a front copper flange which is fixed by screws on said sleeve. Said known temperture probe suffers from a relatively long thermal response time.

CH—A—389 275 discloses a temperature probe consisting of an outer metal sleeve the front end of which is closed by means of a metal-pin extending into the interior of said sleeve. The pin is provided with an outwardly open bore. In the interior of the sleeve said pin is surrounded by a thin inner sleeve made of insulating material which carries wire windings forming the temperature sensor. The known probe suffers from a relatively long thermal response time. Furthermore, vibrations or impacts on the probe easily separate the inner sleeve at its junction with the pin.

US—A—4 087 775 and US—A—3 267 733 represent dissimilar probes to that of the invention which amongst other materials make use of a refractory material in some constructional parts.

It is a task for the invention to create a temperature probe with which a short thermal response time is achieved and which provides sufficient ruggedness.

This can be achieved by a temperature probe as claimed by claim 1.

The refractory packing material in the cavity electrically insulates the sensor from the walls of the tip portion body. However, the sensor can be placed so close to the walls of the cavity that heat transfer from the tip portion body to the sensor takes place quickly in order to ensure a quick thermal response time. Furthermore, the refractory packing material holds the sensor in place within the cavity and supports it when vibrations of the probe or sudden impacts occur. Since the sensor does not directly contact the wall of the cavity the material for the tip portion body as well as the sensor itself can be selected in view of short thermal response time and sufficient strength of the probe.

Preferred embodiments are disclosed in the depending claims.

An embodiment of the object of the invention will be described in connection with the drawings. In the drawings is

Figure 1 a side-view of a temperature probe,

Figure 2 a cross-section in Figure 1 along line 2—2; and

Figure 3 a cross-section along line 3—3 in Fig. 2.

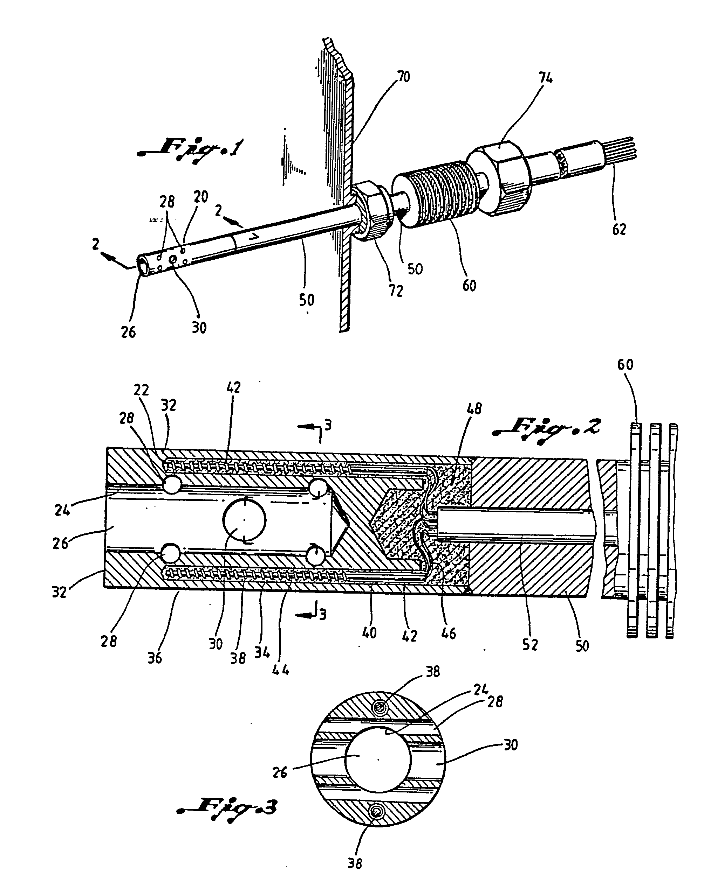

In Figures 1—3 a cylindrical metal tip portion body 20 provides a temperature sensitive tip for a temperature probe. A cylindrical metal support portion 50 forms the remainder of the temperature probe including a stem. The tip portion body 20 may be made of nickel. It has an interior hollow portion 26 which is in thermal communication with the probe's surroundings, e.g. by placing an interior surface 24 of hollow interior portion 26 in fluid communication with the temperature probe's surroundings. Said fluid communication may be enhanced by the provision of passages or holes 28, 30. If portion 26 is partially or completely filled with another material, such material generally should have preferably at least as high a thermal conductivity as the tip body walls.

Tip body walls 32 are equipped with generally cylindrical interior cavities 22, 34. These are located with respect to hollow portion 26 so as to facilitate heat transfer. Cavities 22, 34 are located close to exterior wall surface 36, which is in direct heat exchange relation with the probe's surroundings.

A sensor 38 is mounted in cavity 22, 34. The sensor 38 is supported and electrically insulated from the walls by means of a packing such as refractory packing material 40. Packing 40 should not be so thick or have such a thermal conductivity as to substantially hinder transfer of heat to the sensor. By way of example, packing 40 may comprise high temperature refractory cement exhibiting properties of good thermal conductivity and high electrical resistance. Such a cement aids in proofing against vibration and shock and electrically insulates the sensor. Ultimately, the packing may be any of a variety of materials, all as would be known to one skilled in the art.

Sensor 38 includes a temperature sensing element such as coiled wire 42 mounted on an elongated support 44. By way of example, the sensor element includes one or more platinum wires coiled around an alumina support 44. A variety of other sensors including different substrates or temperature sensing elements may be used.

A contact places the sensor 38 in communication with a measuring device for measuring the sensing elements response to changes in temperature in the probe's surroundings. Wires 46 are with one end connected to the sensor 38 and the other end to other wires or an appropriate measuring device such as a signal conditioner.

Tip portion body 20 is equipped with an interior void volume 48. This serves not only to facilitate placing of the wires 46 with respect to sensor 38, but accommodate an insulating material (high temperature refractory cement) which can either electrically or thermally insulate wires 46.

Support portion 50 is integrally attached to the tip portion body 20 by welding or by other methods.

Support portion 50 serves as a partial thermal barrier in order to enhance the overall performance of the probe. At least that portion of the support portion 50 adjacent to the tip body 20 preferably has an effective thermal conductivity lower than that of the tip body. Support portion 50 may be made up of a metal having a lower thermal conductivity then the metal in cylindrical metal casing 20 of stainless steel. Alternately, it may be possible to reduce that portion of the support portion 50 which is integrally mounted to and in direct contact with the tip body. Alternately, the support portion 50 can comprise two types of material, one of which forms at least a substantial part of the support portion adjacent the tip body, thus reducing the overall thermal conductivity. However, it is preferable to provide support portion made up largely or entirely of metal in order to provide sufficient overall strength to the probe.

Support portion 50 is equipped with an elongated passageway 52 facilitating communication between sensor 38 and the measuring device. Ultimately, separate sensing element wires or various electrical elements could be employed in passageway 52, such elements being, in turn, hooked up to wires 46.

Support portion 50 can be equipped with a heat dissipation mechanism such as fins 60 which facilitates transfer of heat to a heat sink such as ambient or flowing air or a fluid conduit in heat exchange relation with the heat dissipation mechanism. Where a seal 74 is employed, heat dissipation fins 60 may be located at a point near seal 74. Seal 74 reduces the chances for moisture or other contaminants to enter the temperature probe. Additionally, the heat dissipation mechanism reduces thermal stress on other elements such as wires 62 and allows a reduction of insulation required. Fins 60 may be made of a variety of materials such as stainless steel or the like. The heat dissipation mechanism is preferably located at a point outside of the surroundings to be measured, as shown in Figure 1, fins 60 are located on the side of wall 70 and stop 72 opposite from tip body 20.

For example, it is believed that, depending upon the dimensions and configuration of other portions of the probe, the length of the tip body 20 may vary from approximately 12.70 mm to 50.8 mm to 76.2 mm or more depending upon the application and the response time desired. Similarly, the outside diameter of the tip body may be 9.5 mm or more depending upon the application and the response time desired. The diameter, as well as the configuration and number of the transverse holes 28, 30 may also be varied. For example, the angular orientation of the transverse holes may be between about 30—45° with the radial horizontal center line of tip body 20. A varying number of cavities 22, 34 may be employed. The number of sensors 38 can also be varied, although the number of sensors is generally preferably kept to a minimum, since this normally facilitates accurate measurement depending on the measuring devices employed. Further, there need not be a one to one correspondence between the number of sensors 38 and the number of cavities 22, 34, to facilitate installation of sensors.

## Examples

A series of plunge and loop current tests were performed with the results generally described in Examples 1—5 below. The tests and calculations were made on behalf of the Applicant by Analysis and Measurement Services, 4706 Papermill Road, Knoxville, Tennessee 37919.

## Example 1

A prototype temperature probe included a cylindrical metal tip body with a hollow end portion with holes through an annular section near the tip. One relatively larger transverse hole was provided along with four smaller transverse holes in the general configuration shown in the drawings. A sensor 38, including a platinum wire mounted on an elongated alumina support 44, was inserted into a cavity 34, 22. The cylindrical metal support portion of stainless steel was welded to cylindrical tip body 20 made of nickel. The four smaller transverse holes 28 were at an angle of 45° to the radial horizontal center line of the tip body. A refractory cement was used to insulate the sensor 38. The probe had an ice point resistance of approximately 200 ohms.

3

TABLE 1
Probe Dimensions for Examples 1 and 5

|  | Prototype Used in Example 1 | Prototype Used in Example 5 |
|---|---|---|
| Length of tip casing | 28.6 mm | 29.8 mm |
| Outside diameter of tip casing | 9.5 mm | 9.5 mm |
| Outside diameter of tip support casing at juncture with tip casing | 9.5 mm | 9.5 mm |
| Inside diameter of interior casing cavity | 5.4 mm | 7.9 mm to 4.0 mm |
| Distance of center of smaller transverse holes from end of tiping | 5.1 mm 15.2 mm | 7.1 mm 14.6 mm |
| Distance of center of larger transverse hole from end of tip casing | 10.2 mm | 10.9 mm |
| Diameter of smaller transverse holes | 2.4 mm | 2.8 mm |
| Diameter of larger transverse hole | 4.7 mm | 4.0 mm |
| Inside diameter of cylindrical wall cavities | 1.6 mm | −2.1 mm |
| Distance from end of cylindrical wall cavity farthest from support casing to end of tip casing farthest from support casing | 4.8 mm | 4.4 mm |
| Minimum distance between interior casing cavity and hollowed out volume 48 | 1.8 mm | 1.8 mm |
| Length of cylindrical wall cavity from juncture with hollowed out volume such as hollowed out volume 48 in drawings to the end of the cylindrical wall cavity | 19.1 mm | 19.1 mm |

Plunge tests were conducted on the prototype to obtain a time constant. The speed of response of resistance temperature probe is usually described in terms of a time constant. The time constant is defined as the time required for a sensor output to reach 63.2 percent of its final value following a step change in surrounding temperature. This time constant can be measured by a plunge test or a loop current step response tests. The former is discussed in this Example while the latter is discussed in Example 3.

A classical experiment for measuring the time constant involves sudden immersion of the sensor from one medium at some fixed temperature into another environment with a different temperature (plunge test). This step change in temperature results in a response transient from which the sensor time constant can be measured. Plunge tests were performed on the prototype from warm air into a rotating tank with room temperature water flowing at 0.9144 meters per second. A rotating cylindrical tank was partially filled with water and rotated. Flow velocity was chosen by selecting radial position in the tank. A solenoid-controlled pneumatic cylinder was used to drive the probe into and out of the water. A timing signal indicated the approximate moment the prototype touched the water surface. The time constants of the prototype were measured by plunge tests in room temperature water at five different flow rates ranging from about 0.3048 to about 1.8288 meters per second. Three to four measurements were then made for each flow rate and then averaged to obtain a time constant for each flow rate. The results are shown in Table 2.

<u>Table 2</u>

| Run No. | Water Temperature | Flow Rate (Feet per Second) | Measured Time Constant (Seconds) | Averaged Time Constant (Seconds) |
|---------|-------------------|-----------------------------|----------------------------------|----------------------------------|
| 1 | (21.11°C) | 0.3557 | 1, 1, .97 | .99 |
| 2 | " | 0.6888 | .76, .74, .76 | .75 |
| 3 | " | 0.9144 | .68, .64, .66, .72 | .68 |
| 4 | " | 1.1796 | .67, .66, .66 | .67 |
| 5 | " | 1.7678 | .60, .616, .6, .612 | .67 |

Example 2

A time constant can be calculated from the following general equation:

$$t. = Cl + (C2)(U)^{-0.6} \qquad (1)$$

where t = time constant     U = fluid flow rate in feet per second
C1, C2 = constants

Using the data obtained in Example 1, C1 and C2 were evaluated, such that:

$$t = 0.34 + (0.70)(U)^{-0.6} \qquad (2)$$

Taking into account the temperature dependence of surface effects, but ignoring the temperature dependence of the internal component of the time constant, C2 was calculated for water temperatures of 287.78°C, such that:

$$t = 0.34 + (0.39)(U)^{-0.6} \qquad (3)$$

Time constants were then calculated at various flow rates for water temperatures of 21.11°C and 287.78°C. The results are shown in Table 3.

## Table 3

### Time Constants Predicted for Prototype at Various Flow Rates and Two Different Temperatures Using Equations (2) and (3)

| Flow Rate (mm/Sec.) | Time Constant (Sec.) 21.11°C | 287.78°C |
|---|---|---|
| 0.3048 | 1.04 | 0.73 |
| 0.6096 | 0.80 | 0.60 |
| 0.9144 | 0.70 | 0.54 |
| 1.2192 | 0.64 | 0.51 |
| 1.5240 | 0.61 | 0.49 |
| 1.8288 | 0.58 | 0.47 |
| 2.1336 | 0.56 | 0.46 |
| 2.4384 | 0.54 | 0.45 |
| 2.7432 | 0.53 | 0.44 |
| 3.0480 | 0.52 | 0.44 |
| 3.6576 | 0.50 | 0.43 |
| 4.2672 | 0.48 | 0.42 |
| 4.8768 | 0.47 | 0.41 |
| 5.4864 | 0.46 | 0.41 |
| 6.0960 | 0.46 | 0.40 |
| 6.7056 | 0.45 | 0.40 |
| 7.3152 | 0.44 | 0.40 |
| 7.9248 | 0.44 | 0.40 |
| 8.5344 | 0.43 | 0.39 |
| 9.1440 | 0.43 | 0.39 |
| 9.7536 | 0.43 | 0.39 |
| 10.3632 | 0.42 | 0.39 |
| 10.9728 | 0.42 | 0.38 |
| 11.5824 | 0.42 | 0.38 |
| 12.1920 | 0.42 | 0.38 |
| 12.8016 | 0.41 | 0.38 |

### Example 3

Using the procedure in Example 1, a number of measurements were made with the prototype of Example 1 installed in water with different angular orientations of the holes 28, 30 relative to the direction of flow. Water temperature was (21.11°C). As a result, the time constant of the prototype varied between about 0.7 to 0.9 of a second depending on the angular orientation. An orientation, wherein the holes were generally in line with the flow of water, resulted in a time constant of 0.70, while an orientation, wherein the holes were generally perpendicular with the flow of water, resulted in a time constant of 0.90.

### Example 4

The prototype of Example 1 was used in Loop Current Step Response (LCSR) tests. An Analysis and Measurement Services ERT—1 Response Time Test Instrument was used along with an associated computer.

The LCSR test allows remote testing of a temperature probe while it is exposed to normal operating conditions and without interference to the plant operation. The LCSR test is based on analysis of a temperature transient that results from a step change in electrical current through the sensing element of the sensor. A standard Wheatstone bridge with current switching capability is used to perform the test. The current through the sensor is switched from a few milliamperes to a level of about 40 to about 80 milliamperes. The increased current produces Joule heating in the sensor and results in a temperature transient that settles out slightly above the temperature of the sensor surroundings.

It has been shown that this internal heating transient can be analyzed to give the time constant of the sensor. It is understood that experience with a number of different temperature probes has shown that agreement between the time constants from plunge and LCSR tests should be better than 10 percent.

LCSR tests were performed with the prototype of Example 1 installed in the flow loop with room temperature (21.11°C) water flowing at 0.9144 m/sec. The data were sampled and analyzed on a microcomputer. This resulted in a time constant of approximately 0.68, which compared favorably with the time constant obtained from plunge testing of the sensor in the flow loop at the same condition. The difference between the two time constants is small indicating that the LCSR method is applicable to the prototype used in Example 1.

The result of the tests and calculations set out in Examples 1—4 indicate that the prototype approaches a time constant of 0.38 second in water at a temperature of 287.78°C and a flow rate of 12.1920 m/sec. The agreement between plunge test results and loop current step response results was found to be about 3 percent indicating that the prototype is LCSR testable. Further, orientation of the holes on the prototype can affect the time constant. Installed temperature detectors of this design, with comparable quality of construction, should yield response characteristics similar to the prototype used in Example 1.

Prior art probes having similar mass and weight may generally have time constants on the order of 3 to 5 seconds, as compared to .7 to .9 seconds shown in the examples. In contrast, it is understood that those probes which can approach the .7 to .9 second time constant sacrifice durability and ruggedness.

Example 5

A second prototype was constructed along the same general lines as that of the prototype used in Example 1. However, the four transverse holes 28 were at an angle of 30° to the radial horizontal center line of tip body 20. Further, the inside diameter of interior hollow portion 26 varied from 7.9 mm at a point farthest from support portion 50 to 4.0 mm along that portion penetrated by the transverse holes. The approximate diameters along with other approximate design measurements are given in Table 1.

The second prototype was tested by the plunge method in a water bath at 18.3°C. Rate of flow was about 0.9144 m/sec. and reaction was measured from a temperature of 49°C. The plunge test was repeated three times, resulting in measurements of about .74, .728 and .724. These time constants were subsequently averaged. The resulting time constant was about 0.73 seconds.

Although the foregoing examples have been mainly directed to the use of generally cylindrical elongated temperature probes for use in measuring process fluids, it should be understood that the probe can also be used to advantage in a wide variety of applications. For example, the surroundings may comprise any of a variety of fluid media including gases or liquids or where the surroundings are largely or partially made up of solids.

**Claims**

1. A temperature probe having a rear support portion (50) supporting a thermally conductive tip portion body (20); said tip portion body (20) confining a hollow interior portion (26) and defining an interior cavity (22, 34), a sensor (38) positioned within said cavity (22, 34), said sensor comprising a temperature sensing element (42) characterized in that said cavity (22, 34) contains a refractory packing material (40) for electrically insulating said sensor (38) from the tip portion body (20) and holding said sensor (38) in place within said cavity (22, 34).

2. A temperature probe according to claim 1, characterized by high temperature refractory cement as packing material (40).

3. A temperature probe according to claim 1 characterized in that said tip portion body (20) defines at least one passageway (28, 30) for fluid communication between said hollow interior portion (26) and the exterior of said tip portion body (20).

4. A temperature probe according to claim 1, characterized in that the support portion (50) has a lower thermal conductivity than the tip portion body (20).

5. A temperature probe according to claim 3, characterized in that the tip portion body (20) is made of nickel and the support portion (50) is made of stainless steel.

6. A temperature probe according to claims 1 to 5, characterized in that said cavity (22, 34) is connected to a void volume (48) within said tip portion body (20), said void volume (48) being configured to facilitate connection of a measuring device and the sensor (38) by one or more connecting wire elements (46), and that the void volume (48) is packed with an electrical insulating packing material (40).

7. A temperature probe according to claim 3 characterized in that said passageways (28, 30) are holes and that the number and arrangement of the holes is balanced to facilitate the flow of fluid medium through at least a portion of said hollow interior portion (26) while minimizing vibrations caused to the tip portion body (20) by the flow of the fluid medium.

8. A temperature probe according to claim 1, characterized in that, said sensor (38) comprises a generally elongated support (49); and a sensing element wire (42) wound around at least a portion of the elongated support (44) and having a variable electrical resistance changing with temperature.

9. A temperature probe according to claim 8, characterized by a platinum wire as said sensing wire element (42).

10. A temperature probe according to claim 1, characterized in that the support portion (50) is equipped with one or more fins (60).

11. A temperature probe according to claim 10, characterized in that a seal (74) is mounted on the support portion (50) and that the fins (60) are located at a point near the seal and between the tip portion body (20) and the seal (74).

**Patentansprüche**

1. Temperatur-Sonde, mit einem hinteren Stützabschnitt (50) zum Haltern eines thermisch leitfähigen Spitzen-Abschnittskörpers (20), wobei der Spitzen-Abschnittskörper (20) einen vorneliegenden hohlen Abschnitt (26) begrenzt und wenigstens einen innenliegenden Hohlraum (22, 34) aufweist, und mit einem im innenliegenden Hohlraum (22, 34) positionierten Temperatur-Sensor (38), der ein temperatursensitives Element (42) aufweist, dadurch gekennzeichnet, daß der innenliegende Hohlraum (22, 34) ein refraktäres Füllungsmaterial (40) zum elektrischen Isolieren des Sensors (38) vom Spitzen-Abschnittskörper (20) enthält, das den Sensor (38) im inneren Hohlraum (22, 34) an seinem Platz hält.

2. Temperatur-Sonde nach Anspruch 1, gekennzeichnet durch hochtemperaturfesten, refraktären Zement als Füllungsmaterial (40).

3. Temperatur-Sonde nach Anspruch 1, dadurch gekennzeichnet, daß in dem Spitzen-Abschnittskörper (20) wenigstens ein Durchgang (28, 30) für eine Fluidkommunikation zwischen dem hohlen Abschnitt (26) und dem Äußeren des Spitzen-Abschnittskörpers (20) vorgesehen ist.

4. Temperatur-Sonde nach Anspruch 1, dadurch gekennzeichnet, daß der Stützabschnitt (50) eine niedrigere thermische Leitfähigkeit hat als der Spitzen-Abschnittskörper (20).

5. Temperatur-Sonde nach Anspruch 3, dadurch gekennzeichnet, daß der Spitzen-Abschnittskörper (20) aus Nickel und der Stützabschnitt (50) aus rostfreiem Stahl hergestellt ist.

6. Temperatur-Sonde nach den Ansprüchen 1 bis 5, dadurch gekennzeichnet, daß der innere Hohlraum (22, 34) mit einen Leer-Volumen (48) innerhalb des Spitzen-Abschnittskörpers (20) verbunden ist, daß das Leer-Volumen (48) so konfiguriert ist, daß es die Verbindung einer Meßvorrichtung mit dem Sensor (38) durch mehrere verbindende Drahtelement (46) erleichtert, und daß das Leer-Volumen (48) mit einem elektrisch isolierenden Füllmaterial (40) ausgefüllt ist.

7. Temperatur-Sonde gemäß Anspruch 3, dadurch gekennzeichnet, daß die Durchgänge (28, 30) Löcher sind, und daß die Anzahl und die Anordnung der Löcher so ausgewählt sind, daß das Strömen eines fluiden Mediums durch zumindest einen Abschnitt des hohlen Abschnitts (26) im Spitzen-Abschnittskörper (26) erleichtert ist, während gleichzeitig Vibrationen aufgrund der Strömung des fluiden Mediums durch den Spitzen-Abschnittskörper (20) minimiert sind.

8. Temperatursonde nach Anspruch 1, dadurch gekennzeichnet, daß der Temperatursensor (38) einen langgestreckten Support (49) aufweist, auf den über zumindest einen Teil seiner Längserstreckung ein Fühlelementdraht (42) aufgewunden ist, der einen variablen elektrischen Widerstand besitzt, der sich mit der Temperatur verändert.

9. Temperatursonde gemäß Anspruch 8, gekennzeichnet durch Platindraht als Fühlelementdraht (42).

10. Temperatursonde nach Anspruch 1, dadurch gekennzeichnet, daß der Stützabschnitt (50) mit einer oder mit mehreren Finnen oder Kühlrippen (60) ausgestattet ist.

11. Temperatursonde nach Anspruch 10, dadurch gekennzeichnet, daß auf dem Stützabschnitt (50) eine Dichtung (74) angebracht ist, und daß die Finnen oder Kühlrippen (60) zwischen dem Spitzen-Abschnittskörper (20) und der Dichtung (74) nahe der Dichtung angeordnet sind.

**Revendications**

1. Sonde de température ayant une partie de support arrière (50) supportant un corps de partie terminale thermiquement conductible (20); ledit corps de partie terminale (20) limitant une partie intérieure creuse (26) et définissant une cavité intérieure (22, 34), un palpeur (38) placé à l'intérieur de ladite cavité (22, 34), ledit palpeur comprenant un élément palpeur de température (42), caractérisée en ce que ladite cavité (22, 34) contient une matière d'étanchéité réfractaire (40) pour isoler électriquement ledit palpeur (38) dudit corps de partie terminale (20) et maintenir ledit palpeur (38) en place à l'intérieur de ladite cavité (22, 34).

2. Sonde de température selon la revendication 1, caractérisée par un ciment réfractaire à température élevée comme matière d'étanchéité (40).

3. Sonde de température selon la revendication 1, caractérisée en ce que ledit corps de partie terminale (20) définit au moins un passage (28, 30) pour une communication de fluide entre ladite partie intérieure creuse (26) et l'extérieur dudit corps de partie terminale (20).

4. Sonde de température selon la revendication 1, caractérisée en ce que la partie de support (50) a une conductivité thermique plus faible que le corps de partie terminale (20).

5. Sonde de température selon la revendication 3, caractérisée en ce que le corps de partie terminale (20) est fait de nickel et la partie de support (50) est faite d'acier inoxydable.

6. Sonde de température selon les revendications 1 à 5, caractérisée en ce que ladite cavité (22, 34) est reliée à un volume poreux (48) à l'intérieur dudit corps de partie terminale (20), ledit volume poreux (48) ayant une configuration propre à faciliter la connexion d'un dispositif de mesure et du palpeur (38) par un ou plusieurs éléments de fil de connexion (46), et en ce que le volume poreux (48) est garni d'une matière d'étanchéité isolante (40).

7. Sonde de température selon la revendication 3, caractérisée en ce que lesdits passages (28, 30) sont des trous et en ce que le nombre et la disposition des trous sont équilibrés pour faciliter l'écoulement du milieu fluide à travers au moins une partie de ladite partie intérieure creuse (26) tout en minimisant les vibrations causées au corps de partie terminale (20) par l'écoulement du milieu fluide.

8. Sonde de température selon la revendication 1, caractérisée en ce que ledit palpeur (38) comprend un support généralement allongé (49); et un fil d'élément palpeur (42) enroulé autour d'au moins une partie du support allongé (44) et ayant une résistance électrique variable changeant selon la température.

9. Sonde de température selon la revendication 8, caractérisée par un fil de platine comme élément de fil palpeur (42).

10. Sonde de température selon la revendication 1, caractérisée en ce que la partie de support (50) est équipée d'une ou de plusieurs ailettes (60).

11. Sonde de température selon la revendication 10, caractérisée en ce qu'un joint (74) est monté sur la partie de support (50) et en ce que les ailettes (60) sont situées en un point proche du joint et entre le corps de partie terminale et le joint (74).

Fig.1

Fig.2

Fig.3

1